# EUROPÄISCHE PATENTANMELDUNG

(11) **EP 1 251 269 A2**
(43) Veröffentlichungstag der Anmeldung: **23.10.2002**
(21) Anmeldenummer: 02008954.6
(22) Anmeldetag: 22.04.2002
(51) Int. Cl.: F03D 11/04

(54) **Windkraftanlage mit verschiebbarem Behälter**

(30) Priorität: 20.04.2001 DE 10119429
(71) Anmelder: Enron Wind GmbH, 48499 Salzbergen (DE)
(72) Erfinder: Becker, Markus, 48149 Münster (DE)
(74) Vertreter: Patentanwälte Leinweber & Zimmermann

(57) **Zusammenfassung**

Die Erfindung betrifft ein Verfahren zum Austausch von Maschinenteilen einer Windkraftanlage mit bordeigenen Mitteln. Erfindungsgemäß weist die Windkraftanlage eine, der Aufnahme von mindestens eines Getriebes und eines Generators dienende Gondel, mit einer im wesentlichen quer zur Turmachse ausgerichteten Längsachse auf. An der Unterseite der Gondel befindet sich eine der Hindurchbewegung von Maschinenteilen dienende Öffnung, und in der Gondel ist ein Bordkran zum Befördern von Gegenständen angeordnet. Weiterhin weist die Windkraftanlage einen der Aufnahme von Bauteilen dienenden Behälter auf, welcher unterhalb der Öffnung in Richtung der Längsachse von einer Betriebsstellung, in der ein turmnaher Bereich der Öffnung von dem Behälter verdeckt ist, in eine Montagestellung verschiebbar ist, in der dieser Bereich der Öffnung freigegeben ist.

## Beschreibung

Die Erfindung betrifft eine Windkraftanlage zur Umwandlung von Windkraft in elektrische Energie mit einem Turm, einem auf dem Turm angebrachten, der Aufnahme von mindestens ein Getriebe und einen Generator umfassenden Maschinenteilen dienenden Gehäuse mit einer im wesentlichen quer zur Turmachse ausgerichteten Längsachse, welches an der Unterseite eines vom Turm in Richtung der Längsachse abstehenden Gehäuseteils eine der Hindurchbewegung von Maschinenteilen dienende Öffnung aufweist, und einem im Gehäuse angeordneten Bordkran zum Befördern von Gegenständen in Richtung der Turmachse. Weiterhin betrifft die Erfindung ein Verfahren zum Austausch von Maschinenteilen des Gehäuses einer Windkraftanlage mittels bordeigenen Mitteln.

Solche Windkraftanlagen werden in DE 196 47 515 A1 und DE 197 41 988 A1 offenbart. Hierin werden Verfahren zum Aufbau einer Windkraftanlage beschrieben, bei denen zum Aufbau des Turmes durch Aufeinandersetzen einzelner Turmsegmente ein längs dieser hochfahrbarer Kran verwendet wird, der schließlich auch das Maschinengehäuse (auch Gondel genannt) und Maschinenteile dessen zur Turmspitze befördert. Bei den Maschinenteilen handelt es sich in erster Linie um den Rotor, bestehend aus Rotornabe mit mindestens einem Rotorblatt, die Hauptwelle mit Wellenlagerung, den Generator und das zwischen Welle und Generator geschaltete Getriebe. Diese Hauptkomponenten sind in der auf dem Turm aufgebrachten Gondel enthalten und bilden den Triebstrang der Windkraftanlage. Wie bei der Montage, so ist auch beim Austausch einer dieser Hauptkomponenten sowie für die Montage und den Austausch des Rotors ein Kran erforderlich. Hier bietet es sich, an die Windkraftanlage mit einem bordeigenen Kransystem zu versehen, wie es in der AT-PS 40 16 74 beschrieben ist. Es ist bereits auf der Fachmesse "Sustain '99.-The World Sustainable Energy Fair" (25. bis 27. Mai 1999) von der Anmelderin Windenergie erstmals der Öffentlichkeit ein Konzept vorgestellt worden, bei dem der Generator mittels eines bordeigenen Kransystems durch eine Öffnung in der Bodenwand des Maschinengehäuses aus diesem heraus abgelassen bzw. in dieses hineinbefördert wird.

Bei den Windkraftanlagen des Standes der Technik sind neben den den Triebstrang bildenden Teilen, wie Rotor, Welle, Getriebe und Generator, weitere Bauteile, wie Transformatoren und andere elektrische Komponenten in der Gondel in Verlängerung des Triebstranges hinter dem Generator angeordnet. Dies erfordert eine über die zur Aufnahme des Triebstranges benötigte Länge hinaus verlängerte Gondel. Da die Bauteile großes Gewicht aufweisen und an Stellen der Gondel, die vom als Unterstützungszentrum dienenden Turm entfernt sind, angeordnet werden, muß die Gondel aus sehr stabilem Material gefertigt werden, um die durch die Hebelwirkung der Bauteile auftretenden Kräfte aufzunehmen.

Die hieraus resultierende Konstruktion der Gondel ist daher von großen Abmessungen in Richtung der Längsachse und vom Einsatz sehr stabiler Materialien geprägt, was zu einem sehr hohen Gewicht und zu hohen Kosten der Windkraftanlage führt. Angesichts dieser Probleme im Stand der Technik liegt der Erfindung die Aufgabe zugrunde eine Windkraftanlage der eingangs genannten Art bereitzustellen, deren Gondel eine kompaktere, kostengünstige Bauweise aufweist und gleichzeitig eine einfache Montage der Maschinenteile mittels eines Bordkranes zuläßt.

Erfindungsgemäß wird diese Aufgabe mittels einer Windkraftanlage der eingangs genannten Art gelöst, die einen der Aufnahme von Bauteilen dienenden Behälter aufweist, welcher unterhalb der Öffnung in Richtung der Längsachse von einer Betriebsstellung, in der ein turmnaher Bereich der Öffnung von dem Behälter verdeckt ist, in eine Montagestellung verschiebbar ist, in der dieser Bereich der Öffnung freigegeben ist.

Diese Erfindung beruht auf der Erkenntnis, daß eine Anordnung der Bauteile in einem eigenen Behälter, welcher unterhalb des Gehäuses angebracht ist, einen verringerten Platzbedarf im Gehäuse bedeutet, was allein schon die Konstruktion eines kompakteren Gehäuses zuläßt. Weiterhin eröffnet der separate Behälter, der vorzusweise elektrotechnische Bauteile enthält, den Austausch der kompletten elektrotechnischen Einheit als ganzes, was beispielsweise nach einem Kabelbrand zeitraubende Verkabelungsarbeiten vermeidet. Da hierdurch auch geringere Kräfte auf das Gehäuse einwirken, können für das Gehäuse Materialien mit geringerer Biegefestigkeit verwendet werden, wodurch die gesamte Gehäusekonstruktion leichter, noch kompakter und damit kostengünstiger gestaltet werden kann. Weiterhin liegt der Erfindung die Erkenntnis zugrunde, daß durch eine Verschiebbarkeit des Behälters von einer Betriebsstellung, in der ein turmnaher Bereich der Öffnung von dem Behälter verdeckt ist, in eine Montagestellung in der dieser Bereich der Öffnung freigegeben wird, die Montage der Maschinenteile mittels eines Bordkrans weiterhin möglich ist. Da das Heraufziehen schwerer Maschinenteile mittels eines Bordkranes wegen der sonst überhandnehmenden Kranmomente in der Nähe des als Unterstützungszentrum dienenden Turmes erfolgen muß, ist die Freigabe des turmnahen Bereiches der Öffnung des Gehäuses durch Verschieben des Behälters zur Ermöglichung einer Nutzung eines Bordkranes notwendig. Außerdem ermöglicht die erfindungsgemäße Windkraftanlage das Herablassen eines im Triebstrang in bezug auf die Lage des Rotors weiter vorne liegenden Maschinenteils, wie des Getriebes, ohne zuvor weiter hinten liegende Maschinenteile, wie den Generator, vom Turm herablassen zu müssen. So kann etwa der Generator in seiner montierten Stellung verbleiben, wenn das Getriebe durch den turmnahen Bereich der Öffnung transportiert wird.

Als erfindungsgemäß vorteilhaft hat es sich erwiesen, wenn der turmnahe Bereich der Öffnung der Hindurchbewegung des Getriebes oder Teilen des Getriebes mittels des Bordkranes dient. Da das Getriebe besonders großes Gewicht aufweist, ist die Möglichkeit, dieses durch die turmnahe Öffnung herabzulassen von besonderer Bedeutung. Ein Herablassen des Getriebes mittels des Bordkranes durch den in größerer Entfernung vom Turm gelegenen Teil der Öffnung ist wegen sehr großer am Kran angreifender Drehmomente nur mittels eines eigens dafür konzipierten Bordkrans möglich.

In zweckmäßiger Ausführungsform liegt in der Betriebsstellung des Behälters ein unterhalb des Generators gelegener Bereich der Öffnung frei. Durch diesen Bereich der Öffnung kann der Generator mittels des Bordkranes vom Gehäuse herabgelassen werden. Dies ist ohne größere Probleme möglich, da der Generator im Vergleich zum Getriebe ein geringeres Gewicht aufweist und daher ohne weiteres vom Bordkran in dieser weiter vom Unterstützungszentrum entfernten Auslenkung gehalten werden kann.

Zudem ist es vorteilhaft, wenn das Getriebe nahe der Betriebsstellung des Behälters angeordnet und durch eine sich in Richtung der Längsachse erstreckende Antriebsverbindung mechanisch mit dem Generator gekoppelt ist. Es ist besonders zweckmäßig, wenn Gegenstände mittels des Bordkrans in Richtung der Längsachse des Gehäuses beförderbar sind. Damit wird es möglich, Maschinenteile, die nicht direkt über der Öffnung montiert sind, wie etwa das Getriebe, zuerst mittels des Bordkranes in Richtung der Längsachse des Gehäuses über einem Bereich der Öffnung im Gehäuseteil zu positionieren und dann durch die Öffnung am Turm entlang herabzulassen.

In besonders vorteilhafter Ausführungsform ist der Behälter an dem Gehäuseteil mittels schienengeführter Laufräder aufgehängt. Ein Aufhängen mittels schienengeführter Laufräder ermöglicht ein problemloses Verschieben des Behälters ohne großen Reibungswiderstand.

Als erfindungsgemäß zweckmäßig hat es sich erwiesen, wenn der Behälter der Aufnahme elektrischer Bauteile dient und sich jeweils zwischen dem Behälter und dem Generator sowie dem Behälter und dem Turm erstreckende Leistungskabel vorgesehen sind, die bei einer Verschiebung des Behälters zwischen Betriebsstellung und Montagestellung entsprechend zur Längenverkürzung zu einer Schlinge faltbar und zur Längenerweiterung aus der Schlingenform streckbar sind. Die Leistungskabel im Turm und zum Container sind lang und flexibel genug, die Verschiebung des Behälters zuzulassen, ohne daß die Leistungskabel vorher abgetrennt werden müssen. Im Behälter können die elektrischen Bauteile komplett vorverkabelt werden. Der Behälter wird getrennt zur Baustelle geliefert und dann am Turm der Windkraftanlage hochgezogen.

In erfindungsgemäß vorteilhafter Ausführungsform ist die Betriebsstellung des Behälters in Richtung der Längsachse des Gehäuses stufenlos einstellbar. Damit kann die Eigenfrequenz der Generatorträger auf die darin auftretenden Schwingungen abgestimmt werden, wodurch eine mögliche Resonanzkatastrophe vermieden werden kann. Diese Möglichkeit der stufenlosen Einstellbarkeit der Betriebsstellung des Behälters ist besonders für Prototypenanlagen wichtig, da hier erst noch die optimale Einstellung gefunden werden muß.

Die Erfindung betrifft ferner ein Verfahren zur Montage bzw. Demontage eines Maschinenteils, insbesondere eines Getriebes oder Getriebeteils, einer Windkraftanlage in einem auf einem Turm aufgebrachten Gehäuse, welches eine im wesentlichen quer zur Turmachse ausgerichtete Längsachse, eine an der Unterseite eines vom Turm in Richtung der Längsachse abstehenden Gehäuseteils angeordnete, der Hindurchbewegung von Maschinenteilen dienende Öffnung und einem im Gehäuse angeordneten Bordkran zum Befördern von Gegenständen aufweist.

Die Erfindung stellt sich mithin die Aufgabe, ein Verfahren der genannten Art bereitzustellen, welches eine kompakte, kostengünstige Bauweise des Gehäuses zuläßt und gleichzeitig eine einfache Montage der Maschinenteile mittels des Bordkranes ermöglicht. Erfindungsgemäß wird die gestellte Aufgabe mittels eines Verfahrens zur Montage eines Maschinenteiles der o.g. Art gelöst, bei welchem Verfahren ein der Aufnahme von Bauteilen dienender Behälter unterhalb der Öffnung in Richtung der Längsachse des Gehäuses von einer Betriebsstellung, in der ein turmnaher Bereich der Öffnung von dem Behälter verdeckt wird, in eine Montagestellung mit größerem Turmabstand, in der dieser Bereich der Öffnung freigegeben wird, verschoben wird, der Bordkran das Maschinenteil am Turm entlang und durch den turmnahen Bereich der Öffnung zieht, der Bordkran das Maschinenteil in Richtung der Längsachse des Gehäuses zu einer vorgesehenen Montagestelle des Maschinenteils transportiert, und der Behälter von der Montagestellung wieder zurück in die Betriebsstellung verschoben wird. Weiterhin wird die Aufgabe mittels eines Verfahrens zur Demontage eines Maschinenteiles der o.g. Art gelöst, bei welchem Verfahren ein der Aufnahme von Bauteilen dienender Behälter unterhalb der Öffnung in Richtung der Längsachse des Gehäuses von einer Betriebsstellung, in der ein turmnaher Bereich der Öffnung von dem Behälter verdeckt wird, in eine Montagestellung mit größerem Turmabstand, in der dieser Bereich der Öffnung freigegeben wird, verschoben wird, der Bordkran das Maschinenteil in Richtung der Längsachse des Gehäuses zu einer Stelle über dem turmnahen Bereich der Öffnung transportiert, der Bordkran das Maschinenteil durch den turmnahen Bereich der Öffnung hindurch am Turm entlang herabläßt, und der Behälter von der Montagestellung wieder zurück in die Betriebsstellung verschoben wird.

Wie bereits oben unter Bezugnahme auf die erfindungsgemäße Windkraftanlage detailliert erläutert, beruhen die erfindungsgemäßen Verfahren auf der Erkenntnis, daß eine Anordnung der Bauteile in einem eigenen, außerhalb des Gehäuses angebrachten Behälters eine Konstruktion eines kompakteren Gehäuses zuläßt. Gleichzeitig ist durch das Verschieben des Behälters von einer turmnahen Betriebsstellung in eine Montagestellung mit größerem Turmabstand die Montage der Maschinenteile mittels des Bordkranes weiterhin problemlos möglich.

Nachstehend wird die Erfindung unter Bezugnahme auf die Zeichnung, auf die hinsichtlich aller erfindungswesentlichen Einzelheiten ausdrücklich verwiesen wird, erläutert. In der Zeichnung zeigt:
- Fig. 1: eine Seitenschnittansicht der erfindungsgemäßen Windkraftanlage zur Umwandlung von Windkraft in elektrische Energie, und
- Fig. 2: eine Draufsicht der erfindungsgemäßen Windkraftanlage zur Umwandlung von Windkraft in elektrische Energie.

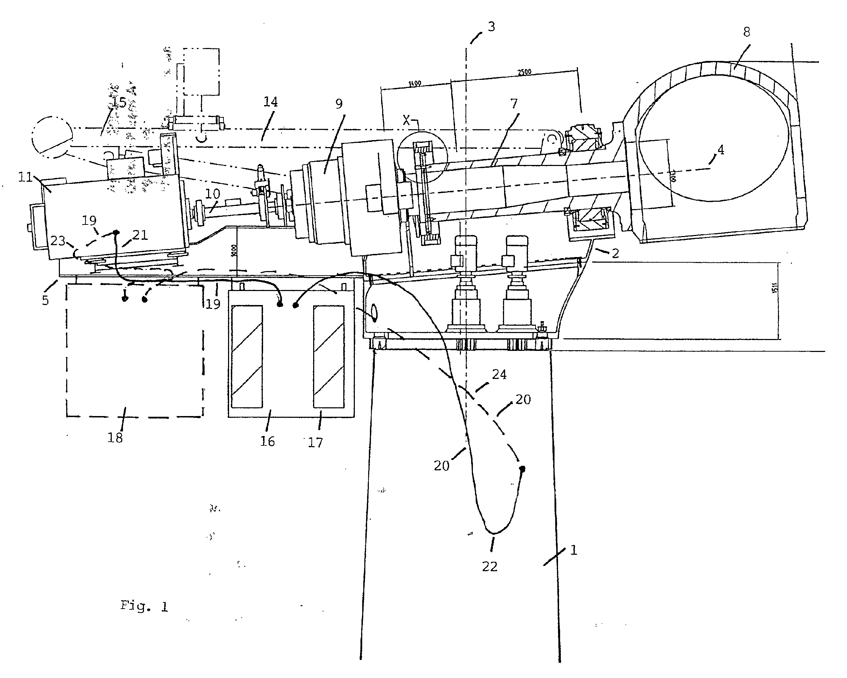

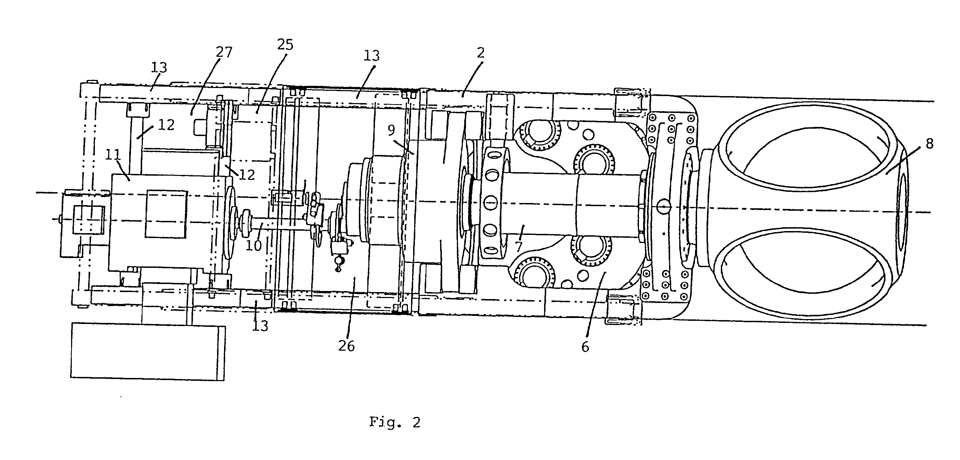

In Fig. 1 und Fig. 2 ist jeweils der prinzipielle Aufbau einer Windkraftanlage gemäß einem bevorzugten Ausführungsbeispiel schematisch dargestellt. Auf einem Fundament befindet sich ein Turm 1, an dessen oberem Ende ein Gehäuse 2 um eine vertikale Drehachse 3 drehbar gelagert ist. In der Darstellung von Fig. 1 ist nur der untere Teil des Gehäuses 2 gezeigt. Das Gehäuse 2 weist eine im wesentlichen quer zur Vertikalachse 3 ausgerichtete Längsachse 4 auf und steht mit einem Gehäuseteil 5 radial vom Turm 1 ab. An dem vorderen Ende des Gehäuses 2 befindet sich in diesem das Hauptlager 6 für die Welle 7, an der der Rotor 8 befestigt ist. Der Rotor 8 weist eine Nabe mit im Regelfall ein, zwei oder drei Rotorblättern auf. Die Welle 7 ist mechanisch mit einem Getriebe 9 verbunden, das über eine schnellaufende Antriebsverbindung 10 mit einem Generator 11 gekoppelt ist.

Der Generator 11 steht auf Füßen, unter denen zwei quer zur Längsachse 4 verlaufende Quertraversen 12 angeordnet sind. Die Quertraversen 12 sind an zwei in Richtung der Längsachse 4 verlaufenden und voneinander beabstandeten Längsträgern 13 des Gehäuseteiles 5 befestigt. Im Bereich 25 zwischen den Längsträgern ist das Gehäuseteil 5 bis zum Turm nach unten hin offen oder mittels geeigneter Klappen zu öffnen. An diese Längsträger 13 ist von unten her ein der Aufnahme elektrischer Bauteile, wie eines Transformators und diverser Schaltschränke, dienender Behälter 16 mittels schienengeführter Laufräder aufgehängt. Dieser Behälter 16 ist entlang der Längsträger 13 von einer Betriebsstellung 17 in eine Montagestellung 18 verschiebbar. In der Betriebsstellung 17, die vom Behälter während des normalen Betriebes der Windkraftanlage zum Erzeugen elektrischen Stromes aus Windkraft eingenommen wird, befindet sich der Behälter in Turmnähe und verdeckt von unten her den turmnahen Abschnitt 26 des offenen Bereiches 25 zwischen den Längsträgern. In der Montagestellung 18 befindet sich der Behälter 16 weiter vom Turm 1 entfernt, nämlich direkt unterhalb der Montagestelle des Generators 11. In dieser Stellung ist der sich unterhalb des Generators 11 befindliche turmferne Abschnitt 27 des offenen Bereiches 25 zwischen den Längsträgern durch den Behälter 16 von unten her verdeckt. Der Behälter 16 ist mittels eines ersten Leistungskabels 19 mit dem Generator 11 und mittels eines zweiten Leistungskabels 20 mit dem Turm 1 verbunden. In der Betriebsstellung 17 des Behälters 16 nimmt das erste Leistungskabel 19 einen Streckzustand 21 des ersten Leistungskabels, in dem das erste Leistungskabel 19 der Länge nach gestreckt ist, und das zweite Leistungskabel 20 einen Faltzustand 22 des zweiten Leistungskabels, in dem das zweite Leistungskabel 20 in Schlingenform gefaltet ist, ein. In der Montagestellung 18 des Behälters 16 nimmt das erste Leistungskabel 19 einen Faltzustand 23 des ersten Leistungskabels, in dem das erste Leistungskabel in Schlingenform gefaltet ist, und das zweite Leistungskabel 20 einen Streckzustand 24 des zweiten Leistungskabels, in dem das zweite Leistungskabel 20 der Länge nach gestreckt ist, ein.

Im Betriebszustand 17 des Behälters 16 läßt sich der Generator 11 durch den turmfernen Abschnitt 27 des offenen Bereiches 25 zwischen den Längsträgern 13 hindurch in das Gehäuse 2 hinein- bzw. aus dem Gehäuse 2 herausbewegen. Dies erfolgt mittels eines bordeigenen, als Schwenkportalkran ausgebildeten Bordkranes 14, der ein Gestell mit zwei schwenkbaren Kranarmen 15 aufweist. In Fig. 1 ist der Bordkran 14 in seiner Parkposition dargestellt, in der er vollständig in dem Gehäuse 2 untergebracht ist. Nach Aufklappen von Deckelklappen des Gehäuses 2 kann der Bordkran 14 aufgerichtet werden. Zum Ablassen des Generators 11 wird der Bordkran 14 derart verschwenkt, daß die oberen Enden seiner Arme 15 oberhalb des Generators 11 angeordnet sind. Nach einem Lösen der Befestigungen der Quertraversen 12 an den Längsträgern 13 kann nun der Generator 11 mitsamt der Quertraversen 12 durch den turmfernen Abschnitt 27 des offenen Bereiches 25 zwischen den Längsträgern hindurch abgelassen bzw. angehoben werden.

Die Montage bzw. der Austausch des Getriebes 9 kann dann erfolgen, wenn sich der Behälter 16 in Montagestellung 18 befindet. In dieser Stellung ist der turmnahe Abschnitt 26 des offenen Bereiches 25 zwischen den Längsträgern nach unten hin frei. Der Generator 11 muß dabei für den Fall, daß er sich schon an seiner Montageposition befindet, nicht von dieser entfernt werden. Da sich das montierte Getriebe 9 gegenüber dem turmnahen Abschnitt 26 des offenen Bereiches 25 zwischen den Längsträgern an einer in Richtung der Längsachse 4 zum Rotor 8 hin verschobenen Stellung befindet, muß das Getriebe 9 zur Demontage zuerst in Richtung der Längsachse 4 zum offenen Bereich 25 zwischen den Längsträgern transportiert werden. Der Transport des Getriebes 9 innerhalb des Gehäuses 2 erfolgt dabei durch entsprechende Verschwenkung der Kranarme 15. Als nächstes kann dann das Getriebe 9 durch den turmnahen Abschnitt 26 des offenen Bereiches 25 zwischen den Längsträgern hindurch herabgelassen werden. Zur Montage des Getriebes 9 wird dieses entsprechend durch den turmnahen Abschnitt 26 hindurch hochgezogen und daraufhin durch Verschwenkung der Kranarme 15 in Richtung der Längsachse 4 des Gehäuses 2 zu seiner Montageposition transportiert. Nach erfolgter Montage des Getriebes 9 wird der Behälter 16 wieder in die Betriebsstellung 17 verschoben.

Für den Fall, daß der Generator 11 bei der Montage oder der Demontage des Getriebes 9 sich nicht an seiner Montageposition im Gehäuse 2 befindet, kann bei entsprechender stabiler Auslegung des Bordkranes 14 das Getriebe 9 auch unter Belassung des Behälters 16 in seiner Betriebsstellung 17 durch den turmfernen Abschnitt 27 des offenen Bereiches 25 zwischen den Längsträgern herabgelassen bzw. heraufgezogen werden.

## Patentansprüche

1. Windkraftanlage zur Umwandlung von Windkraft in elektrische Energie mit einem Turm (1), einem auf dem Turm angebrachten, der Aufnahme von mindestens ein Getriebe (9) und einen Generator (11) umfassenden Maschinenteilen dienenden Gehäuse (2) mit einer im wesentlichen quer zur Turmachse (3) ausgerichteten Längsachse (4), welches an der Unterseite eines vom Turm in Richtung der Längsachse abstehenden Gehäuseteils (5) eine der Hindurchbewegung von Maschinenteilen dienende Öffnung (25) aufweist, und einem im Gehäuse angeordneten Bordkran (14) zum Befördern von Gegenständen in Richtung der Turmachse, **dadurch gekennzeichnet, daß** die Windkraftanlage einen der Aufnahme von Bauteilen dienenden Behälter (16) aufweist, welcher unterhalb der Öffnung in Richtung der Längsachse von einer Betriebsstellung (17), in der ein turmnaher Bereich (26) der Öffnung von dem Behälter verdeckt ist, in eine Montagestellung (18) verschiebbar ist, in der dieser Bereich der Öffnung freigegeben ist.

2. Windkraftanlage nach Anspruch 1, **dadurch gekennzeichnet, daß** der turmnahe Bereich der Öffnung der Hindurchbewegung des Getriebes oder Teilen des Getriebes mittels des Bordkranes dient.

3. Windkraftanlage nach einem der vorausgehenden Ansprüche, **dadurch gekennzeichnet, daß** in der Betriebsstellung des Behälters ein unterhalb des Generators gelegener Bereich (27) der Öffnung freiliegt.

4. Windkraftanlage nach einem der vorausgehenden Ansprüche, **dadurch gekennzeichnet, daß** das Getriebe nahe der Betriebsstellung des Behälters angeordnet und durch eine sich in Richtung der Längsachse erstreckende Antriebsverbindung (10) mit dem Generator gekoppelt ist.

5. Windkraftanlage nach einem der vorausgehenden Ansprüche, **dadurch gekennzeichnet, daß** Gegenstände mittels des Bordkrans in Richtung der Längsachse des Gehäuses beförderbar sind.

6. Windkraftanlage nach einem der vorausgehenden Ansprüche, **dadurch gekennzeichnet, daß** der Behälter an dem Gehäuseteil mittels schienengeführter Laufräder aufgehängt ist.

7. Windkraftanlage nach einem der vorausgehenden Ansprüche, **dadurch gekennzeichnet, daß** der Behälter der Aufnahme elektrischer Bauteile dient, und sich jeweils zwischen dem Behälter und dem Generator sowie dem Behälter und dem Turm erstreckende Leistungskabel (19, 20) vorgesehen sind, die bei einer Verschiebung des Behälters zwischen Betriebsstellung und Montagestellung entsprechend zur Längenverkürzung zu einer Schlinge faltbar und zur Längenerweiterung aus der Schlingenform streckbar sind.

8. Windkraftanlage nach einem der vorausgehenden Ansprüche, **dadurch gekennzeichnet, daß** die Betriebsstellung des Behälters in Richtung der Längsachse des Gehäuses stufenlos einstellbar ist.

9. Verfahren zur Montage eines Maschinenteils, insbesondere eines Getriebes oder Getriebeteils, einer Windkraftanlage in einem auf einem Turm aufgebrachten Gehäuse, welches eine im wesentlichen quer zur Turmachse ausgerichtete Längsachse, eine an der Unterseite eines vom Turm in Richtung der Längsachse abstehenden Gehäuseteils angeordnete, der Hindurchbewegung von Maschinenteilen dienende Öffnung und einen im Gehäuse angeordneten Bordkran zum Befördern von Gegenständen aufweist, **dadurch gekennzeichnet, daß**
- ein der Aufnahme von Bauteilen dienender Behälter unterhalb der Öffnung in Richtung der Längsachse des Gehäuses von einer Betriebsstellung, in der ein turmnaher Bereich der Öffnung von dem Behälter verdeckt wird, in eine Montagestellung mit größerem Turmabstand, in der dieser Bereich der Öffnung freigegeben wird, verschoben wird,
- der Bordkran das Maschinenteil am Turm entlang und durch den turmnahen Bereich der Öffnung zieht,
- der Bordkran das Maschinenteil in Richtung der Längsachse des Gehäuses zu einer vorgesehenen Montagestelle des Maschinenteils transportiert, und
- der Behälter von der Montagestellung wieder zurück in die Betriebsstellung verschoben wird.

10. Verfahren zur Demontage eines Maschinenteils, insbesondere eines Getriebes oder Getriebeteils, einer Windkraftanlage in einem auf einem Turm aufgebrachten Gehäuse, welches eine im wesentlichen quer zur Turmachse ausgerichtete Längsachse, eine an der Unterseite eines vom Turm in Richtung der Längsachse abstehenden Gehäuseteils angeordnete, der Hindurchbewegung von Maschinenteilen dienende Öffnung und einen im Gehäuse angerdneten Bordkran zum Befördern von Gegenständen aufweist, **dadurch gekennzeichnet, daß**
- ein der Aufnahme von Bauteilen dienender Behälter unterhalb der Öffnung in Richtung der Längsachse des Gehäuses von einer Betriebsstellung, in der ein turmnaher Bereich der Öffnung von dem Behälter verdeckt wird, in eine Montagestellung mit größerem Turmabstand, in der dieser Bereich der Öffnung freigegeben wird, verchoben wird,
- der Bordkran das Maschinenteil in Richtung der Längsachse des Gehäuses zu einer Stelle über dem turmnahen Bereich der Öffnung transportiert,
- der Bordkran das Maschinenteil durch den turmnahen Bereich der Öffnung hindurch Turm entlang herabläßt, und
- der Behälter von der Montagestellung wieder zurück in die Betriebsstellung verschoben wird.
